# EUROPÄISCHE PATENTANMELDUNG

(11) **EP 4 328 738 A1**
(43) Veröffentlichungstag der Anmeldung: **28.02.2024**
(21) Anmeldenummer: 22192262.8
(22) Anmeldetag: 26.08.2022
(51) Int. Cl.: G06F 7/76

(54) **SENSORANORDNUNG**

(71) Anmelder: Leuze electronic GmbH + Co. KG, 73277 Owen/Teck (DE)
(72) Erfinder: Heckmayr, Alexander, 86807 Buchloe (DE); Linsenmayer, Jörg, 73272 Neidlingen (DE); Schulze, Christopher, 73265 Dettingen u. Teck (DE)
(74) Vertreter: Ruckh, Rainer Gerhard

(57) **Zusammenfassung**

Die Erfindung betrifft eine Sensoranordnung (1) mit einem optischen Sensor (3), welcher Sensorkomponenten (4) und eine Steuer- und Auswerteeinheit (10) aufweist. In der Steuer- und Auswerteeinheit (10) werden abhängig von Sensorsignalen der Sensorkomponenten (4) Messwerte generiert, die über eine Schnittstelle an eine externe Einheit ausgegeben werden. Die Steuer- und Auswerteeinheit (10) weist einen Hauptprozessor (11) und einen Subprozessor (12) auf, wobei der Subprozessor (12) die als SSI-Schnittstelle ausgebildete Schnittstelle aufweist. In dem Hauptprozessor (11) werden aus den Messwerten Datensätze (16, 16') mit Datenbits (16a) und Prüfbits generiert, die an den Subprozessor (12) übertragen werden. In dem Subprozessor (12) werden die Datensätze (16, 16') bitweise invertiert und dann in den Hauptprozessor (11) rückgelesen und dort überprüft.

## Beschreibung

Die Erfindung betrifft eine Sensoranordnung und ein Verfahren zum Betrieb einer Sensoranordnung.

Eine derartige Sensoranordnung ist aus der DE 102 11 779 B1 bekannt. Die dort beschriebene Sensoranordnung weist einen optischen Sensor mit einem Sendelichtstrahlen emittierenden Sender, einem Empfangslichtstrahlen empfangenden Empfänger, Mitteln zur Führung der Sendelichtstrahlen innerhalb eines Abtastbereichs und einer Auswerteeinheit zur Auswertung der am Ausgang des Empfängers anstehenden Empfangssignale auf. Mit dem optischen Sensor erfolgt die Erfassung von Marken, welche ein Positionsmaßsystem bilden. Durch die Erfassung von Marken des Positionsmaßsystems zu zwei unterschiedlichen Zeitpunkten wird zudem die Geschwindigkeit des optischen Sensors relativ zum Positionsmaßsystem bestimmt.

Der optische Sensor ist besonders vorteilhaft an einem Fahrzeug angebracht, wobei das Positionsmaßsystem stationär an der Fahrbahn angeordnet ist, entlang derer das Fahrzeug bewegt wird. Prinzipiell kann auch ein Positionsmaßsystem bezüglich einer stationär angeordneten optoelektronischen Vorrichtung bewegt werden. Durch die fortlaufende Erfassung der Marken des Positionsmaßsystems werden in dem optischen Sensor kontinuierlich die aktuellen Geschwindigkeits- und Positionsmesswerte ermittelt und an die Steuerung des Fahrzeugs übermittelt. In der Steuerung können diese Messwerte ohne weitere Auswertung und insbesondere ohne jeden Synchronisationsaufwand direkt zur Steuerung des Fahrzeugs verwendet werden. Insbesondere kann in der Steuerung die Einhaltung von vorgegebenen Geschwindigkeitsprofilen für das Fahrzeug fortlaufend kontrolliert werden. Zusammen mit den aktuellen Informationen über die Position des Fahrzeugs kann dieses reproduzierbar und punktgenau auf vorgegebene Sollpositionen eingefahren werden.

Aus der DE 10 2005 047 658 A1 ist eine Vorrichtung bekannt, die ein von einer Anordnung von Marken gebildetes Positionsmaßsystem, sowie einen optischen Sensor zur Erfassung der Marken des Positionsmaßsystems umfasst. Der optische Sensor und das Positionsmaßsystem sind relativ zueinander beweglich angeordnet. Dem optischen Sensor ist ein Sensorelement fest zugeordnet, mittels dessen die Marken des Positionsmaßsystems oder Markierungen eines dem Positionsmaßsystem fest zugeordneten Maßsystems erfassbar ist. Die vom optischen Sensor und vom Sensorelement generierten Signale werden in einem Auswertesystem ausgewertet.

Mit dem zusätzlich zum optischen Sensor eingesetzten Sensorelement zur Erfassung des Positionsmaßsystems oder eines zusätzlichen Maßsystems wird ein zweikanaliges, diversitäres Sensorsystem geschaffen, mittels dessen eine fehlersichere Generierung von Positionsinformationen ermöglicht wird. Durch die zweikanalige Sensorstruktur ist die erfindungsgemäße Vorrichtung für Positionieraufgaben in sicherheitstechnischen Bereichen einsetzbar.

Nachteilig ist hierbei, dass die zweikanalige Sensorstruktur einen hohen konstruktiven Aufbau mit sich bringt.

Der Erfindung liegt die Aufgabe zugrunde, eine Sensoranordnung der eingangs genannten Art mit geringem Aufwand fehlersicher auszugestalten.

Zur Lösung dieser Aufgabe sind die Merkmale der unabhängigen Ansprüche vorgesehen. Vorteilhafte Ausführungsformen und zweckmäßige Weiterbildungen der Erfindung sind in den unabhängigen Ansprüchen beschrieben.

Die Erfindung betrifft eine Sensoranordnung mit einem optischen Sensor, welcher Sensorkomponenten und eine Steuer- und Auswerteeinheit aufweisen. In der Steuer- und Auswerteeinheit werden abhängig von Sensorsignalen der Sensorkomponenten Messwerte generiert, die über eine Schnittstelle an eine externe Einheit ausgegeben werden. Die Steuer- und Auswerteeinheit weist einen Hauptprozessor und einen Subprozessor auf, wobei der Subprozessor die als SSI-Schnittstelle ausgebildete Schnittstelle aufweist. In dem Hauptprozessor werden aus den Messwerten Datensätze mit Datenbits und Prüfbits generiert, die an den Subprozessor übertragen werden. In dem Subprozessor werden die Datensätze bitweise invertiert und dann in den Hauptprozessor rückgelesen und dort überprüft.

Die Erfindung betrifft auch ein entsprechendes Verfahren.

Der optische Sensor der erfindungsgemäßen Sensoranordnung erfüllt die normativen Anforderungen für den Einsatz im Bereich der Sicherheitstechnik. Ein wesentlicher Vorteil besteht dabei darin, dass der optische Sensor hierzu keine redundante zweikanalige Sensorstruktur, d.h. keine redundante Struktur von Sensorkomponenten benötigt, um diese Anforderungen zu erfüllen. Der optische Sensor kann damit mit geringem konstruktivem Aufwand hergestellt werden.

Das Grundkonzept des optischen Sensors der erfindungsgemäßen Sensoranordnung besteht darin, dessen Steuer- und Auswerteeinheit in Form einer fehlersicheren Prozessorstruktur auszubilden.

Erfindungsgemäß weist der optische Sensor eine Prozessorstruktur in Form eines Hauptprozessors und eines Subprozessors auf. Die Fehlersicherheit dieser Struktur wird dadurch erreicht, dass im Hauptprozessor Messwerte aus den Sensorsignalen generiert werden. Diese Messwerte werden in Form von Datenbits in Datensätzen formatiert, die zudem Prüfbits aufweisen, anhand derer eine Fehlerkontrolle bei der weiteren Verarbeitung der Datensätze möglich ist. Diese Datensätze werden dem Subprozessor für eine Fehlerkontrolle zugeführt. Diese Fehlerkontrolle erfolgt in Form einer Dynamisierung der Datensätze, wodurch statische Fehler, d.h. ein Einfrieren von Datensätzen, aufgedeckt werden kann.

Die dynamisierten Datensätze werden dann in den Hauptprozessor rückgelesen, wo eine Überprüfung dieser rückgelesenen Datensätze erfolgt.

Durch dieses Rücklesen kann auf unitgestestet Codes in den Prozessoren verzichtet werden.

Damit kann mit einem geringen Hardwareaufwand die für den Einsatz im Bereich der Sicherheitstechnik erforderliche Fehlersicherheit erreicht werden.

Generell wird der optische Sensor bei Aufdeckung eines Fehlers im Hauptprozessor mittels dieses Hauptprozessors in einen sicheren Zustand überführt.

Der sichere Zustand kann in einem Abschalten des optischen Sensors bestehen. Ein unsicherer Betrieb des optischen Sensors wird dadurch vermieden.

Erfindungsgemäß ist im Subprozessor eine Schnittstelle in Form einer SSI-Schnittstelle vorgesehen. Dabei weisen die Datensätze ein für die SSI-Schnittstelle benötigtes Format auf.

Die im Hauptprozessor generierten und an den Subprozessor ausgegebenen Datenbits der Datensätze können damit direkt über die SSI-Schnittstelle an die externe Einheit ausgegeben werden.

Dabei weist die SSI-Schnittstelle des Subprozessors einen Datenausgang und einen Clock-Eingang auf.

Gemäß einer vorteilhaften Ausführungsform wird der optische Sensor der erfindungsgemäßen Sensoranordnung zu Positionieraufgaben eingesetzt. Dementsprechend werden mittels des optischen Sensors Messwerte in Form von Positionswerten generiert.

Die SSI-Schnittstelle ist für die Ausgabe dieser Messwerte in Form von Positionswerten besonders geeignet.

Besonders vorteilhaft ist die erfindungsgemäße Sensoranordnung derart ausgebildet, dass diese ein Positionsmaßsystem mit einer Anordnung von Marken, in welchen die Absolutpositionen innerhalb des Positionsmaßsystems kodiert sind, aufweist, wobei die Marken vom optischen Sensor erfasst werden.

Dabei werden die Marken mittels des optischen Sensors ortsaufgelöst erfasst.

Generell sind der optische Sensor und das Positionsmaßsystem relativ zueinander beweglich angeordnet.

Prinzipiell kann der optische Sensor stationär und das Positionsmaßsystem beweglich angeordnet sein. Besonders vorteilhaft befindet sich der optische Sensor auf einer mobilen Einheit, wie z.B. einem Fahrzeug. Durch Lesen der Marken des stationär angeordneten Positionsmaßsystems und Bestimmen der AbsolutPosition des optischen Sensors und damit der mobilen Einheit kann diese genau an Zielorten positioniert werden. Bei diesem Ausführungsbeispiel bildet die externe Einheit, an die die Positionswerte des optischen Sensors ausgelesen werden, die Steuerung der mobilen Einheit.

Gemäß einer vorteilhaften Ausführungsform weist jeder Datensatz Datenbits, ein Toggle-Bit und CRC-Prüfbits auf.

Die Datensätze bilden somit Daten-Tripel.

Die CRC-Prüfbits bilden eine CRC-Prüfsumme, die über den jeweiligen Datensatz berechnet wird. Vorteilhaft wird eine 8 bit CRC verwendet. Damit können Verfälschungen einzelner Bits des Datensatzes aufgedeckt werden.

Das Toggle-Bit wird vom Hauptprozessor in jedem Daten-Tripel, welches an den Subprozessor übertragen wird, in seiner Wertigkeit geändert, d.h. von 0 auf 1 oder von 1 auf 0 getoggelt. Hierdurch wird vermieden, dass bei identischen Positionswerten ein immer identisches Daten-Tripel an den Subprozessor gesendet wird. Durch diese Dynamisierung der Daten kann ein mögliches "Einfrieren" der Rücklesedaten aufgedeckt werden.

Gemäß einer vorteilhaften Ausführungsform ist der Hauptprozessor ein ARM-Prozessor.

Dabei weist der Hauptprozessor vorteilhaft eine sichere Firmware auf.

Weiter vorteilhaft ist der Subprozessor ein PRU-Prozessor.

Derartige Subprozessoren sind für schnelle, einfache und deterministische Kommunikationsaufgaben vorgesehen und für dieses Aufgabenfeld optimiert.

Gemäß einer vorteilhaften Ausführungsform bildet die externe Einheit einen SSI-Master aus oder weist einen solchen auf. Der SSI-Master sendet ein Clock-Signal, welches einen Takt für aus dem Subprozessor an die externe Einheit auszulesende Datensätze vorgibt.

Dabei wird das Clock-Signal über den Clock-Eingang eingelesen.

Der Subprozessor arbeitet asynchron zum Clock-Signal, erkennt jedoch die Clock-Signale und stellt entsprechend die Datensätze zum frühest möglichen Zeitpunkt zur jeweiligen Abfrage bereit.

Gemäß einer besonders vorteilhaften Ausführungsform der Erfindung sendet der Subprozessor parallel zu den in den Hauptprozessor rückgelesenen Datensätzen eine Alive-Meldung an den Hauptprozessor.

Dabei werden im Hauptprozessor für eine Fehlerkontrolle die rückgelesenen Datensätze geprüft und zudem geprüft, ob für jeden rückgelesenen Datensatz eine Alive-Meldung vorliegt.

Anhand der Alive-Meldung sind weitere, umfangreichere Fehlerprüfungen im Hauptprozessor möglich. Insbesondere kann damit geprüft werden, ob der Rücklesevorgang der Datensätze korrekt verläuft oder im Fehlerfall ausgefallen ist.

Vorteilhaft erfolgt die Generierung der rückzulesenden Datensätze und des Alive-Signals abhängig vom Clock-Signal.

Zweckmäßig bildet eine Anzahl von Clock-Signalen eine SSI-Masteranfrage.

Dann wird mit jeder SSI-Masteranfrage eine Alive-Meldung vom Subprozessor an den Hauptprozessor gesendet.

Gemäß einer konstruktiv vorteilhaften Ausgestaltung wird das Clock-Signal einem SSI-Clock-Register des Subprozessors zugeführt. Der Subprozessor liest den Zustand des SSI-Clock-Registers aus und gibt diesen mit Alive-Daten an den Hauptprozessor weiter.

Vorteilhaft wird der Datentransfer zwischen dem Hauptprozessor und dem Subprozessor derart realisiert, dass die Datensätze aus einer Sende-Mailbox des Hauptprozessors an den Subprozessor gesendet werden. Die aus dem Subprozessor rückgelesenen Datensätze werden einer Rücklese-Mailbox des Hauptprozessors zugeführt.

Gemäß einer vorteilhaften Ausführungsform werden für jeden Datensatz, der dem Subprozessor zugeführt ist, die CRC-Prüfbits in einer Speichereinheit zwischengespeichert. Die Datenbits werden mit dem Toggle-Bit als reduzierter Datensatz einem Parallel-Seriell-Wandler zugeführt. Die im Parallel-Seriell-Wandler gewandelten reduzierten Datensätze werden einem Pin-Ausgangsregister zugeführt.

Dabei werden im Folgenden nur die Datenbits mit dem Toggle-Bit weiterverarbeitet.

Parallel hierzu werden nur die Datenbits der reduzierten Datensätze aus dem Pin-Ausgangsregister über den Datenausgang der SSI-Schnittstelle ausgegeben.

Das Toggle-Bit wird somit unterdrückt und nicht über der SSI-Schnittstelle an die externe Einheit ausgegeben.

Hierzu ist vorteilhaft eine Schaltungsanordnung zur Unterdrückung des Toggle-Bits in einem reduzierten Datensatz vorgesehen.

Vorteilhaft wird zur Unterdrückung des Toggle-Bits eine Tiefpasswirkung der Schaltungsanordnung ausgenutzt. Zur Bearbeitung der reduzierten Datensätze werden die reduzierten Datensätze aus dem Pin-Ausgangsregister ausgelesen, bitweise invertiert und einem Seriell-Parallel-Wandler zugeführt.

Dabei werden für einen im Seriell-Parallel-Wandler gewandelten reduzierten Datensatz die zwischengespeicherten CRC-Prüfsummen zu dem reduzierten Datensatz hinzugeführt, wodurch ein Datensatz erhalten wird, der an den Hauptprozessor ausgegeben wird.

Durch die Invertierung der Daten wird ein fehlerhaftes Einfrieren von Daten erkannt.

Diese Schritte der Datenbearbeitung stellen aktive Programm schritte dar, wodurch festgestellt werden kann, dass die Firmware des Subprozessors arbeitet.

Schließlich wird im Hauptprozessor für den rückgelesenen Datensatz unter Berücksichtigung der durchgeführten Invertierung erneut eine CRC-Prüfsumme berechnet und mit der in der Rücklese-Mailbox vorhandenen CRC-Prüfsumme verglichen.

Damit erfolgt eine Fehlerkontrolle der rückgelesenen Datensätze.

Die Erfindung wird im Folgenden anhand der Zeichnungen erläutert. Es zeigen:
- Figur 1:: Ausführungsbeispiel der erfindungsgemäßen Sensoranordnung.
- Figur 2:: Blockschaltbild der Steuer- und Auswerteeinheit des optischen Sensors gemäß Figur 1.

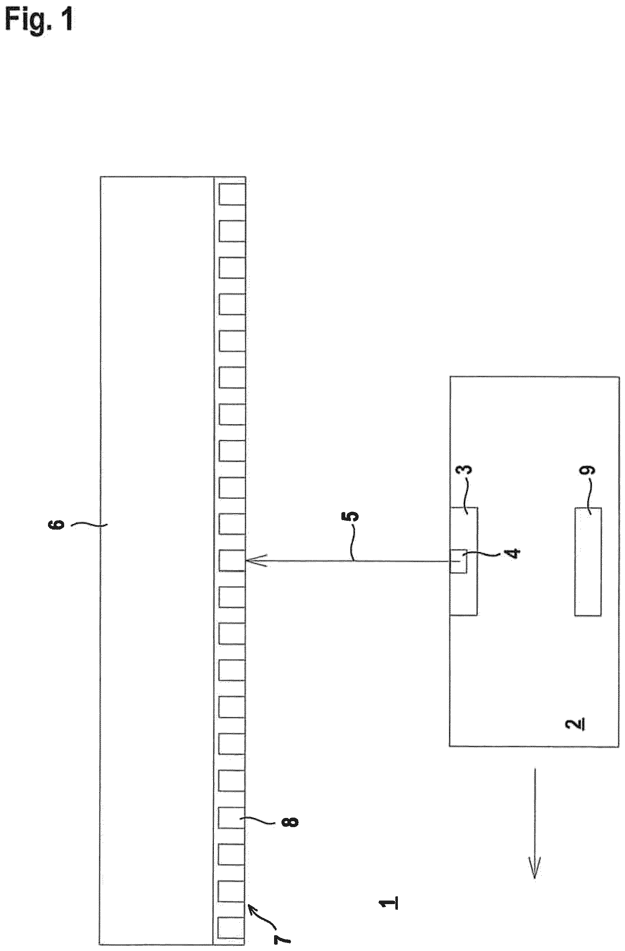

Figur 1 zeigt schematisch ein Ausführungsbeispiel der erfindungsgemäßen Sensoranordnung 1.

Die Sensoranordnung 1 umfasst einen auf einem Fahrzeug 2 angeordneten optischen Sensor 3. Der optische Sensor 3 weist Sensorkomponenten 4 auf, die zur Emission und zum Empfang von Lichtstrahlen 5 ausgebildet sind.

Die Sensorkomponenten 4 können einen Lichtstrahlen 5 emittierenden Sender und einen ortsauflösenden Empfänger, wie z.B. eine CMOS- oder CCD-Matrix, aufweisen. Alternativ kann der optische Sensor 3 als Scanner ausgebildet sein. Dann werden die Lichtstrahlen 5 eines Senders, periodisch innerhalb eines Abtastbereichs abgelenkt. Der Empfänger kann dann zu einer Photodiode gebildet sein.

Mit dem optischen Sensor 3 wird ein Positionsmaßsystem 6 an einer Fahrbahnbegrenzung 7 abgetastet. Das Positionsmaßsystem 6 besteht aus einer äquidistanten Folge von Marken 8. In den Marken 8 sind deren Absolutpositionen im Positionsmaßsystem 6 kodiert.

Durch Lesen der Marken 8 mittels des optischen Sensors 3 wird die Absolutposition des optischen Sensors 3 und damit des Fahrzeugs 2 bestimmt. Zur Bestimmung von Feinpositionen erfasst der optische Sensor 3 die Marken 8 ortsaufgelöst. Die mit dem optischen Sensor 3 generierten Positionswerte werden in eine Fahrzeugsteuerung 9 als externe Einheit eingelesen.

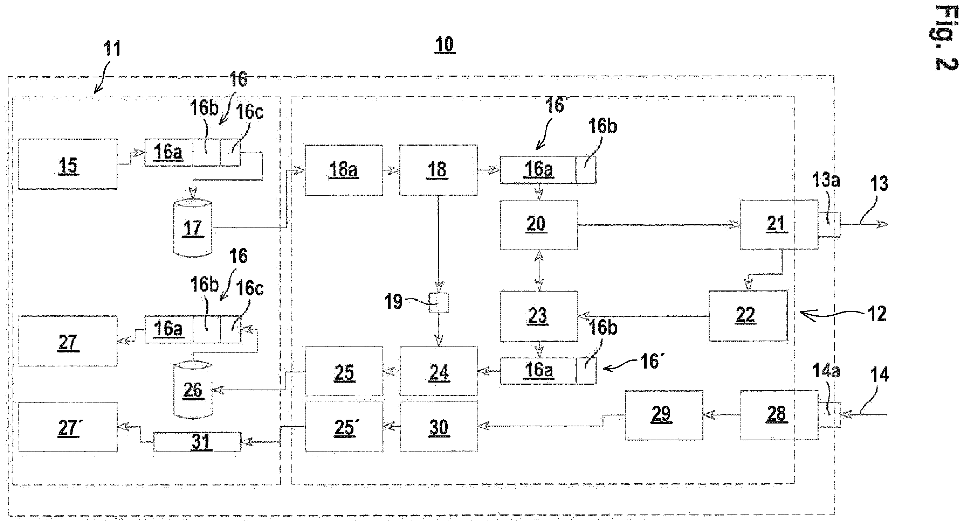

Figur 2 zeigt ein Blockschaltbild der Steuer- und Auswerteeinheit 10 des optischen Sensors 3 gemäß Figur 1. Die Steuer- und Auswerteeinheit 10 dient zur Steuerung der Sensorkomponenten 4 und zur Auswertung der Sensorsignale der Sensorkomponenten zur Generierung von Messwerten in Form von Positionswerten. Die Steuer- und Auswerteeinheit 10 weist eine Schnittstelle in Form einer SSI-Schnittstelle auf, über welche die ermittelten Positionswerte an die externe Einheit, im vorliegenden Fall die Fahrzeugsteuerung 9, ausgegeben werden.

Die Steuer- und Auswerteeinheit 10 umfasst einen Hauptprozessor 11 und einen Subprozessor 12. Der Hauptprozessor 11 ist ein ARM-Prozessor mit sicherer Firmware, der Subprozessor 12 ist ein PPU-Prozessor. Dieser weist einen Datenausgang 13 mit einem Pin 13a und einem Clock-Eingang 14 mit einem Pin 14a als Komponenten der SSI-Schnittstelle auf. Die einzelnen Module des Hauptprozessors 11 und Subprozessors 12 gemäß Figur 2 sind vorteilhaft als Softwaremodule ausgebildet.

Über den Clock-Eingang 14 werden Clock-Signale eingelesen. Die externe Einheit bildet einen SSI-Master aus, der Master-Anfragen in Form von Taktbüscheln des Clock-Signals an die Steuer- und Auswerteeinheit 10 sendet.

Im Hauptprozessor 11 ist eine Berechnungseinheit 15 vorgesehen, die abhängig von Sensorsignalen der Sensorkomponente 4 des optischen Sensors Messwerte in Form von Positionswerte generiert. Dabei werden diese Positionswerte als Datenbits 16a mit einem Toggle-Bit 16b und einer CRC-Prüfsumme, die für die Datenbits 16a und das Toggle-Bit 16b berechnet wird, versehen, wobei die Prüfsumme im vorliegenden Fall eine 8 bit-CRC 16c mit einer entsprechenden Zahl von Prüfbits ist.

Die Datenbits 16a, das Toggle-Bit 16b und die 8 bit-CRC 16c bilden einen Datensatz 16 in Form eines Datentriples, welches ein für die SSI-Schnittstelle benötigtes Format aufweist.

In nacheinander folgenden Datensätzen wechselt das Toggle-Bit 16b seine Wertigkeit vom Bitwert 0 auf 1 oder umgekehrt.

Die Datensätze werden nacheinander in eine Sende-Mailbox 17 des Hauptprozessors 11 eingelesen. Im Subprozessor 12 erfolgt ein Auslesen 18a der Datensätze.

Das Einschreiben der Datensätze in die Sende-Mailbox 17 erfolgt bei jeder neuen Messwert-Erfassung unabhängig vom Auslesen der Datensätze 18a durch den Subprozessor 12.

Die Datensätze werden einem Weitergabemodul 18 zugeführt. Dort wird die 8 bit-CRC 16c jedes Datensatzes 16 separiert und in einer Speichereinheit 19 zwischengespeichert. Die verbleibenden, reduzierten Datensätze 16' mit den Datenbits 16a und dem Toggle-Bit 16b werden einem Parallel-Seriell-Wandler 20 zugeführt, wo eine entsprechende Parallel-Seriell-Wandlung der reduzierten Datensätze 16'durchgeführt wird. Diese erfolgt im Takt des Clock-Signals.

Die im Parallel-Seriell-Wandler 20 gewandelten reduzierten Datensätze werden einem Pin-Ausgangsregister 21 zugeführt.

Die Datenbits 16a der reduzierten Datensätze 16' werden im Takt des Clock-Signals über den Datenausgang 13 der SSI-Schnittstelle ausgegeben. Das im reduzierten Datensatz 16' noch vorhandene Toggle-Bit 16b wird durch eine Schaltungsanordnung mit Tiefpass-Wirkung unterdrückt, so dass es nicht mit den Datenbits 16a ausgegeben wird.

Weiterhin werden die reduzierten Datensätze 16' aus dem Pin-Ausgangsregister 21 ausgelesen und in einem Invertierer 22 bitweise invertiert. Die Invertierung ist ein aktiver Programmschritt, anhand dessen festgestellt wird, ob die Firmware des Subprozessors 12 arbeitet.

Mit dem Toggle-Bit 16b kann überprüft werden, ob die Daten in den reduzierten Datensätzen 16' eingelesen sind, da dessen Wert sich bei jedem reduziertem Datensatz 16' ändert.

Die am Ausgang des Invertierers 22 erhaltenen Daten der reduzierten Datensätze 16' werden in einem Seriell-Parallel-Wandler 23 gewandelt. In einem Bearbeitungsmodul 24 wird zu dem gewandelten reduzierten Datensatz 16'die zwischengespeicherte 8 bit-CRC 16c hinzugefügt. Der so erhaltene Datensatz 16 mit den invertierten Datenbits 16a, dem invertierten Toggle-Bit 16b und der hinzugefügten 8 bit-CRC 16c aus der Speichereinheit 19 wird über ein Ausgabemodul 25 am Subprozessor 12 ausgegeben und in eine Rücklese-Mailbox 26 des Hauptprozessors 11 eingelesen.

In einem Prüfmodul 27 des Hauptprozessors 11 wird für den rückgelesenen Datensatz 16, 16' aus der Rücklese-Mailbox 26 unter Berücksichtigung der Invertierung der Daten des Datensatzes 16 eine neue CRC-Prüfsumme, d.h. eine neue 8 bit-CRC 16c berechnet und mit der in dem Datensatz vorhandenen 8 bit-CRC 16c verglichen. Im fehlerfreien Fall stimmen die 8 bit-CRC 16c überein. Nach dieser Prüfung wird der Datensatz 16 in der Rücklese-Mailbox 26 gelöscht.

Mit jeder SSI-Masteranfrage wird weiterhin eine Alive-Meldung generiert, die vom Subprozessor 12 an den Hauptprozessor 11 übermittelt wird.

Hierzu wird das Clock-Signal einem SSI-Clock-Register 28 zugeführt und von dort mittels eines Auslese-Moduls 29 ausgelesen und weitergeleitet. In einem Alive Modul 30 werden Alive-Daten 31 durch das Clock-Signal generiert, wodurch die Alive-Meldung generiert wird, die über ein Ausgabemodul 25' an den Hauptprozessor 11 ausgegeben wird. Die entsprechenden Alive-Daten 31 werden einem Prüfmodul 27' zugeführt.

Die Alive-Meldungen werden parallel mit dem Rücklesen der Datensätze 16 aus dem Subprozessor 12 in den Hauptprozessor 11 generiert, wobei die Generierung der Datensätze und der Alive-Meldungen jeweils im Intervall der SSI-Mastanfragen erfolgt.

Mit den Alive-Meldungen wird die Aktivität der SSI-Schnittstellen und des Subprozessors 12 geprüft.

Durch die parallele Prüfung der Datensätze und der Alive-Meldungen kann ein Fehler in Form des Ausfalls der Rücklesedaten erkannt werden.

Wird im Hauptprozessor 11 bei den durchgeführten Prüfungen ein Fehler festgestellt, wird der optische Sensor 3 in einen sicheren Zustand überführt.

### Bezugszeichenliste

- (1): Sensoranordnung
- (2): Fahrzeug
- (3): Optischer Sensor
- (4): Sensorkomponente
- (5): Lichtstrahlen
- (6): Positionsmaßsystem
- (7): Fahrbahnbegrenzung
- (8): Marke
- (9): Fahrzeugsteuerung
- (10): Steuer- und Auswerteeinheit
- (11): Hauptprozessor
- (12): Subprozessor
- (13): Datenausgang
- (13a): Pin
- (14): Clock-Eingang
- (14a): Pin
- (15): Berechnungseinheit
- (16): Datensatz
- (16'): reduzierter Datensatz
- (16a): Datenbit
- (16b): Toggle-Bit
- (16c): 8 bit-CRC
- (17): Sende-Mailbox
- (18): Weitergabemodul
- (18a): Auslesen der Datensätze
- (19): Speichereinheit
- (20): Parallel-Seriell-Wandler
- (21): Pin-Ausgangsregister
- (22): Invertierer
- (23): Seriell-Parallel-Wandler
- (24): Bearbeitungsmodul
- (25): Ausgabemodul
- (25'): Ausgabemodul
- (26): Rücklese-Mailbox
- (27): Prüfmodul
- (27'): Prüfmodul
- (28): SSI-Clock-Register
- (29): Auslese-Modul
- (30): Alive Modul
- (31): Alive-Daten

## Patentansprüche

1. Sensoranordnung (1) mit einem optischen Sensor (3), welcher Sensorkomponenten (4) und eine Steuer- und Auswerteeinheit (10) aufweist, wobei in der Steuer- und Auswerteeinheit (10) abhängig von Sensorsignalen der Sensorkomponenten (4) Messwerte generiert werden, die über eine Schnittstelle an eine externe Einheit ausgegeben werden, **dadurch gekennzeichnet, dass** die Steuer- und Auswerteeinheit (10) einen Hauptprozessor (11) und einen Subprozessor (12) aufweist, wobei der Subprozessor (12) die als SSI-Schnittstelle ausgebildete Schnittstelle aufweist, dass in dem Hauptprozessor (11) aus den Messwerten Datensätze (16) mit Datenbits (16a) und Prüfbits generiert werden, die an den Subprozessor (12) übertragen werden und dass in dem Subprozessor (12) die Datensätze (16) bitweise invertiert und dann in den Hauptprozessor (11) rückgelesen werden und dort überprüft werden.

2. Sensoranordnung (1) nach Anspruch 1, **dadurch gekennzeichnet, dass** die Datensätze (16) ein für die SSI-Schnittstelle benötigtes Format aufweisen.

3. Sensoranordnung (1) nach einem der Ansprüche 1 oder 2, **dadurch gekennzeichnet, dass** jeder Datensatz (16) Datenbits (16a), ein Toggle-Bit (16b) und CRC-Prüfbits aufweist.

4. Sensoranordnung (1) nach Anspruch 3, **dadurch gekennzeichnet, dass** mittels des Toggle-Bits (16b) eine Dynamisierung eines Datensatzes (16) erzielt wird.

5. Sensoranordnung (1) nach einem der Ansprüche 1 bis 4, **dadurch gekennzeichnet, dass** der Subprozessor (12) ein PRU-Prozessor ist.

6. Sensoranordnung (1) nach einem der Ansprüche 1 bis 5, **dadurch gekennzeichnet, dass** der Hauptprozessor (11) ein ARM-Prozessor ist.

7. Sensoranordnung (1) nach einem der Ansprüche 1 bis 6, **dadurch gekennzeichnet, dass** der Hauptprozessor (11) eine sichere Firmware aufweist.

8. Sensoranordnung (1) nach einem der Ansprüche 1 bis 7, **dadurch gekennzeichnet, dass** die SSI-Schnittstelle des Subprozessors (12) einen Datenausgang (13) und einen Clock-Eingang (14) aufweist.

9. Sensoranordnung (1) nach einem der Ansprüche 1 bis 8, **dadurch gekennzeichnet, dass** die externe Einheit einen SSI-Master aufweist oder ausbildet, wobei der SSI-Master ein Clock-Signal sendet, welches einen Takt für aus dem Subprozessor (12) an die externe Einheit auszulesende Datensätze vorgibt.

10. Sensoranordnung (1) nach Anspruch 9, **dadurch gekennzeichnet, dass** das Clock-Signal über den Clock-Eingang (14) eingelesen wird.

11. Sensoranordnung (1) nach einem der Ansprüche 1 bis 10, **dadurch gekennzeichnet, dass** parallel zu den in den Hauptprozessor (11) rückgelesenen Datensätzen (16) der Subprozessor (12) eine Alive-Meldung an den Hauptprozessor (11) sendet.

12. Sensoranordnung (1) nach Anspruch 11, **dadurch gekennzeichnet, dass** im Hauptprozessor (11) für eine Fehlerkontrolle die rückgelesenen Datensätze (16) geprüft werden und zudem geprüft wird, ob für jeden rückgelesenen Datensatz (16) eine Alive-Meldung vorliegt.

13. Sensoranordnung (1) nach einem der Ansprüche 1 bis 12, **dadurch gekennzeichnet, dass** der optische Sensor (3) bei Aufdeckung eines Fehlers im Hauptprozessor (11) mittels dieses Hauptprozessors (11) in einen sicheren Zustand überführt wird.

14. Sensoranordnung (1) nach einem der Ansprüche 9 bis 13, **dadurch gekennzeichnet, dass** die Generierung der rückzulesenden Datensätze (16) und des Alive-Signals abhängig vom Clock-Signal erfolgt.

15. Sensoranordnung (1) nach Anspruch 14, **dadurch gekennzeichnet, dass** eine Anzahl von Clock-Signalen eine SSI-Masteranfrage bildet.

16. Sensoranordnung (1) nach Anspruch 15, **dadurch gekennzeichnet, dass** mit jeder SSI-Masteranfrage eine Alive-Meldung vom Subprozessor (12) an den Hauptprozessor (11) gesendet wird.

17. Sensoranordnung (1) nach einem der Ansprüche 14 bis 16, **dadurch gekennzeichnet, dass** das Clock-Signal einem SSI-Clock-Register (28) des Subprozessors (12) zugeführt wird, und dass der Subprozessor (12) den Zustand des SSI-Clock-Registers (28) ausliest und mit Alive-Daten (31) an den Hauptprozessor (11) weitergibt.

18. Sensoranordnung (1) nach einem der Ansprüche 1 bis 17, **dadurch gekennzeichnet, dass** die Datensätze (16) aus einer Sende-Mailbox (17) des Hauptprozessors (11) an den Subprozessor (12) gesendet werden, und dass die aus dem Subprozessor (12) rückgelesenen Datensätze (16) einer Rücklese-Mailbox (26) zugeführt werden.

19. Sensoranordnung (1) nach Anspruch 18, **dadurch gekennzeichnet, dass** für jeden Datensatz (16), der dem Subprozessor (12) zugeführt ist, die CRC-Prüfbits in einer Speichereinheit (19) zwischengespeichert werden und die Datenbits (16a) mit dem Toggle-Bit (16b) als reduzierter Datensatz (16') einem Parallel-Seriell-Wandler (20) zugeführt werden und die im Parallel-Seriell-Wandler (20) gewandelten reduzierten Datensätze (16') aus der Speichereinheit (19) einem Pin-Ausgangsregister (21) zugeführt werden.

20. Sensoranordnung (1) nach Anspruch 19, **dadurch gekennzeichnet, dass** die reduzierten Datensätze (16') nur dann dem PIN-Ausgangsregister (21) zugeführt werden, wenn der SSI-Master ein Clock-Signal sendet.

21. Sensoranordnung (1) nach Anspruch 20, **dadurch gekennzeichnet, dass** nur die Datenbits (16a) der reduzierten Datensätze (16') aus dem Pin-Ausgangsregister (21) über den Datenausgang (13) der SSI-Schnittstelle ausgegeben werden.

22. Sensoranordnung (1) nach Anspruch 21, **dadurch gekennzeichnet, dass** eine Schaltungsanordnung zur Unterdrückung des Toggle-Bits (16b) in einem reduzierten Datensatz (16') vorgesehen ist.

23. Sensoranordnung (1) nach einem der Ansprüche 20 bis 22, **dadurch gekennzeichnet, dass** die reduzierten Datensätze (16, 16') aus dem Pin-Ausgangsregister (21) ausgelesen, bitweise invertiert und einem Seriell-Parallel-Wandler (23) zugeführt werden.

24. Sensoranordnung (1) nach Anspruch 23, **dadurch gekennzeichnet, dass** für einen im Seriell-Parallel-Wandler (23) gewandelten reduzierten Datensatz (16, 16') die zwischengespeicherten CRC-Prüfbits aus der Speichereinheit (19) zu dem reduzierten Datensatz (16') hinzugeführt werden, wodurch ein Datensatz (16) erhalten wird, der an den Hauptprozessor (11) ausgegeben wird.

25. Sensoranordnung (1) nach Anspruch 24, **dadurch gekennzeichnet, dass** im Hauptprozessor (11) für den rückgelesenen Datensatz (16) unter Berücksichtigung der durchgeführten Invertierung erneut CRC-Prüfbits berechnet werden und mit den in der Rücklese-Mailbox (26) vorhandenen CRC-Prüfbits verglichen werden.

26. Sensoranordnung (1) nach einem der Ansprüche 1 bis 25, **dadurch gekennzeichnet, dass** mittels des optischen Sensors (3) Messwerte in Form von Positionswerten generiert werden.

27. Sensoranordnung (1) nach einem der Ansprüche 1 bis 26, **dadurch gekennzeichnet, dass** diese ein Positionsmaßsystem (6) mit einer Anordnung von Marken (8), in welchen die Absolutpositionen innerhalb des Positionsmaßsystems (6) kodiert sind, aufweist, wobei die Marken (8) vom optischen Sensor (3) erfasst werden.

28. Sensoranordnung (1) nach Anspruch 27, **dadurch gekennzeichnet, dass** die Marken (8) mittels des optischen Sensors (3) ortsaufgelöst erfasst werden.

29. Sensoranordnung (1) nach einem der Ansprüche 27 oder 28, **dadurch gekennzeichnet, dass** der optische Sensor (3) und das Positionsmaßsystem (6) relativ zueinander beweglich angeordnet sind.

30. Verfahren zum Betrieb einer Sensoranordnung (1) mit einem optischen Sensor (3), welcher Sensorkomponenten (4) und eine Steuer- und Auswerteeinheit (10) aufweist, wobei in der Steuer- und Auswerteeinheit (10) abhängig von Sensorsignalen der Sensorkomponenten (4) Messwerte generiert werden, die über eine Schnittstelle an eine externe Einheit ausgegeben werden, **dadurch gekennzeichnet, dass** die Steuer- und Auswerteeinheit (10) einen Hauptprozessor (11) und einen Subprozessor (12) aufweist, wobei der Subprozessor (12) die als SSI-Schnittstelle ausgebildete Schnittstelle aufweist, dass in dem Hauptprozessor (11) aus den Messwerten Datensätze (16, 16') mit Datenbits (16a) und Prüfbits generiert werden, die an den Subprozessor (12) übertragen werden und dass in dem Subprozessor (12) die Datensätze (16, 16') bitweise invertiert und dann in den Hauptprozessor (11) rückgelesen werden und dort überprüft werden.
